# EUROPÄISCHE PATENTSCHRIFT

(11) **EP 3 317 000 B1**
(45) Veröffentlichungstag und Bekanntmachung des Hinweises auf die Patenterteilung: **07.09.2022**
(21) Anmeldenummer: 16744309.2
(22) Anmeldetag: 01.07.2016
(51) Int. Cl.: B01D 61/36

(54) **VORRICHTUNG UND VERFAHREN ZUR OSMOTISCHEN DESTILLATION**
DEVICE AND METHOD FOR OSMOTIC DISTILLATION
DISPOSITIF ET PROCÉDÉ POUR LA DISTILLATION OSMOTIQUE

(30) Priorität: 01.07.2015 DE 102015110620
(43) Veröffentlichungstag der Anmeldung: 09.05.2018
(73) Patentinhaber: Major Bravo Limited, Road Town, Tortola (VG)
(72) Erfinder: WENZEL, Markus, 81925 München (DE)
(74) Vertreter: Betten & Resch
(86) Internationale Anmeldenummer: PCT/EP2016/065510
(87) Internationale Veröffentlichungsnummer: WO 2017/001665

(56) Entgegenhaltungen:
- CN-B- 102 350 220
- DE-A1-102013 200 998
- DE-A1-102013 220 199
- DE-A1-102014 110 746
- DE-B4-102013 220 199

## Beschreibung

Die vorliegende Erfindung betrifft eine Vorrichtung und ein Verfahren zur osmotischen Destillation.

In der Verfahrenstechnik, insbesondere der Lebensmittelverfahrenstechnik, gibt es Problemstellungen, bei denen verdünnte Lösungen schonend konzentriert werden sollen. Schonend bedeutet dabei, dass starke Temperaturerhöhungen vermieden werden sollen, damit sich beispielsweise Aromastoffe nicht verflüchtigen und aus der Lösung ausdampfen. Diese Aufgabe kann mit osmotischer Destillation gelöst werden, die ohne Zufuhr von externer Wärme ablaufen kann. Die osmotische Destillation stellt eine Kombination von Osmose und Destillation dar. Osmose ist das Hindurchdringen eines Lösungsmittels, z. B. Wasser, durch eine selektiv durchlässige Membranwand in eine stärker konzentrierte Lösung. Bei der Destillation wird ein Lösungsmittel aufgrund einer Dampfdruckdifferenz verdampft und an anderer Stelle wieder kondensiert. Für die osmotische Destillation wird eine aufzukonzentrierende Flüssigkeit, eine Zuglösung und eine diese beiden Flüssigkeiten trennende flüssigkeitsdichte, aber gasdurchlässige Membranwand benötigt. Durch die Membranwand gelangt Dampf aus der aufzukonzentrierenden Flüssigkeit in die Zuglösung und kondensiert dort. Die aufzukonzentrierende Flüssigkeit und die Zuglösung strömen auf unterschiedlichen Seiten entlang der Membranwand und befinden sich in direktem Kontakt mit der Membranwand. Als Zuglösung kann beispielsweise konzentriertes Salzwasser, z. B. eine CaC - WasserLösung, verwendet werden, die im Laufe des Prozesses verdünnt wird. In der Veröffentlichung "Application of osmotic membrane distillation process in red grape juice concentration" von W. Kujawski, A. Sobolewska, K. Jarzynka, C. Güell, M. Ferrando, J. Warczok, erschienen in Journal of Food Engineering 1 16 (2013) 801-808, ist ein herkömmliches osmotisches Destillationsverfahren zur Traubensaftkonzentration beschrieben. Für die Membranwand wurde in diesem Fall PTFE als Material verwendet und als Zuglösung eine Calciumchlorid-Lösung eingesetzt. Das Verfahren wurde so betrieben, dass Aromaten enthalten blieben.

Ein weiteres herkömmliches osmotisches Destillationsverfahren mit einer Hohlfasermembran ist aus der Veröffentlichung "Shell-side mass transfer of hollow fibre modules in osmotic distillation process" von R. Thanedgunbaworn, R. Jiraratana- non, M. H. Nguyen, erschienen in Journal of Membrane Science 290 (2007) 105- 1 13, bekannt. Die Veröffentlichung "Concentration and temperature polarization effects during osmotic membrane distillation" von B. Ravindra Babu, N. K. Rastogi, K. S. M. S. Raghavarao, erschienen in Journal of Membrane Science 322 (2008) 146-153, befasst sich mit dem Massen- und Stofftransport in osmotischen Destillationsverfahren sowie Temperatur- und Konzentrationspolarisation an der Membranwand. Es wird gezeigt, dass mit Temperaturabnahme der aufzukonzentrierenden Flüssigkeit das treibende Gefälle für den Stoffübergang abnimmt.

Weitere herkömmliche osmotische Destillationsverfahren finden sich in den Schriften US 4 781 837 A, US 5 382 365 A, CN 102 350 220 B sowie der nicht vorveröffentlichten DE 10 2014 110746 A1. Schließlich beschreibt die Schrift US 2012 / 0 028 878 A1 die Anwendung der osmotischen Destillation für Proteinlösungen.

Eine großtechnische Umsetzung der osmotischen Destillation ist bislang noch nicht erfolgt, was nicht zuletzt an den im Folgenden genannten Problemen liegt. Die auf dem Markt erhältlichen Membranwände, die für die osmotische Destillation geeignet sind, weisen eine gute Dichtigkeit gegenüber Flüssigkeiten auf. Jedoch kann aufgrund einer mechanischen Beschädigung der Membranwand oder aus einem sonstigen Grund ungewollt Flüssigkeit durch die Membranwand gelangen, was dazu führt, dass die aufzukonzentrierende Flüssigkeit und die Zuglösung sich vermischen und sich gegenseitig verunreinigen.

Weiterhin können ausgasende, aber aufgrund eines niedrigen Dampfdrucks schlecht kondensierende Stoffe sich in den Poren der Membranwand ansammeln und den Stofftransport des zu destillierenden Stoffs durch die Membranwand behindern.

Die treibende Kraft für den Stofftransport des übergehenden Stoffs, welcher ein Lösungsmittel, z. B. Wasser, sein kann, ist dessen Dampfdruckdifferenz von der aufzukonzentrierenden Flüssigkeit zur Zuglösung. Beim Stoffübergang wird die aufzukonzentrierende Flüssigkeit durch Verdampfen abgekühlt und die Zuglösung erwärmt. Dieser Wärmeübergang verringert das treibende Druckgefälle, da der Dampfdruck in der aufzukonzentrierenden Flüssigkeit sinkt und in der Zuglösung steigt. Entlang der Membranwand findet eine Wärmerückgewinnung statt, die Wärmerückgewinnung fällt jedoch vergleichsweise gering aus, da die Membranwand meist keine gute Wärmeleitfähigkeit aufweist.

Eine für eine herkömmliche osmotische Destillation verwendete flüssigkeitsdichte und gasdurchlässige Membranwand ist in der Regel sehr dünn und entsprechend weich. Zur Erhöhung der Festigkeit wird die Membranwand daher häufig auf eine Stützschicht, ein sogenanntes Backing, aufgebracht. Bei der Verwendung einer Membranwand mit einem derartigen Aufbau befindet sich eine der Prozessflüssigkeiten in Kontakt mit der Stützschicht, die eine raue Oberfläche hat. Hier findet im Gegensatz zur glatten Membranoberfläche vermehrt Konzentrationspolarisation statt, was den Stoffübergang verringert. Der Erfindung liegt die Aufgabe zugrunde, eine verbesserte Vorrichtung zur osmotischen Destillation zu schaffen, die insbesondere die oben genannten, bei herkömmlichen Vorrichtungen zur osmotischen Destillation auftretenden Probleme zumindest verringert.

Eine erfindungsgemäße Vorrichtung zur osmotischen Destillation, welche die vorstehende Aufgabe löst, umfasst eine oder mehrere osmotische Destillationsstufen. Jede osmotische Destillationsstufe weist mindestens einen eine aufzukonzentrierende Flüssigkeit führenden Strömungskanal und mindestens einen eine Zuglösung führenden Strömungskanal auf. Weiterhin weist jede osmotische Destillationsstufe einen Dampfraum auf, der durch mindestens eine dampfdurchlässige und flüssigkeitsdichte erste Membranwand von dem mindestens einen die aufzukonzentrierende Flüssigkeit führenden Strömungskanal getrennt ist und der durch mindestens eine dampfdurchlässige und flüssigkeitsdichte zweite Membranwand von dem mindestens einen die Zuglösung führenden Strömungskanal getrennt ist.

Durch den vorstehend beschriebenen Aufbau der osmotischen Destillationsstufe verdampfen die leichtsiedenden Komponenten der aufzukonzentrierenden Flüssigkeit aufgrund einer Partialdruckdifferenz durch die Membranwand. Sofern der Dampfdruck für den übergehenden Stoff in der Zuglösung niedriger als in der aufzukonzentrierenden Lösung ist, gelangt während des Betriebs der Vorrichtung ein aus der aufzukonzentrierenden Flüssigkeit entstehender Dampf durch die mindestens eine erste Membranwand in den Dampfraum und Dampf gelangt aus dem Dampfraum durch die mindestens eine zweite Membranwand in die Zuglösung und kondensiert dort. Die osmotische Destillation benötigt als solche keine zusätzliche Wärme oder die Anwendung einer Druckdifferenz als treibende Kraft. Es kann jedoch insbesondere ein thermisch unterstützter Betrieb der Vorrichtung vorgesehen sein. Bei der aufzukonzentrierenden Flüssigkeit kann es sich beispielsweise um ein Gemisch unterschiedlicher Flüssigkeiten, eine Lösung, welche einen in einem Lösungsmittel gelösten Stoff enthält, oder eine Emulsion handeln. Ferner können Lebensmittel mit der erfindungsgemäßen Vorrichtung aufkonzentriert werden.

Darüber hinaus kann eine defekte Membranwand zu einem Tropfenflug der durch die Membranwand gelangten Flüssigkeit bzw. Zuglösung durch den Dampfraum führen. Um zu vermeiden, dass derartige Tropfen zu einer Kontamination der Prozessflüssigkeiten führen, ist eine labyrinthartigen Führung des aus der aufzukonzentrierenden Flüssigkeit entstehenden und durch die mindestens eine erste Membranwand hindurchtretenden Dampfs vorgesehen. Dazu ist der Dampfraum von mindestens einer der osmotischen Destillationsstufen durch mehrere in einer Reihe angeordnete Kammern unterteilt. Die erste in der Reihe angeordnete Kammer enthält den mindestens einen die aufzukonzentrierende Flüssigkeit führenden Strömungskanal und die letzte in der Reihe angeordnete Kammer enthält den mindestens einen die Zuglösung führenden Strömungskanal. Benachbarte Kammern sind durch eine jeweilige flüssigkeits- und gasdichte Trennwand voneinander getrennt. Jede Trennwand weist eine für den Dampf durchlässige Öffnung auf, so dass der durch die mindestens eine erste Membranwand hindurchtretende Dampf durch die Öffnung zu der mindestens einen zweiten Membranwand gelangen kann. Außerdem kann mindestens eine Öffnung mit einer Flüssigkeitssperre, insbesondere einem Damm, versehen sein, die den Durchtritt von am Boden der jeweiligen Kammer angesammelter Flüssigkeit bzw. Zuglösung durch die Öffnung verhindert. Somit gelangt lediglich der Dampf von der mindestens einen ersten Membranwand zu der mindestens einen zweiten Membranwand, während Tropfen aus Flüssigkeit oder Zuglösung von der Trennwand oder den Trennwänden aufgefangen werden.

Als Zuglösung können beliebige Lösungen mit niedrigerem Dampfdruck für den übergehenden Dampf als dessen Dampfdruck in der aufzukonzentrierenden Flüssigkeit, insbesondere wässrige Lösungen von Alkalihydroxiden, insbesondere von NaOH, oder von NaCI, CaC , MgC , Polyglykole usw. verwendet werden. Bevorzugt ist die Zuglösung eine Lösung, die sich über den Dampfdruck sowohl trennen als auch regenerieren lässt.

Im Unterschied zur herkömmlichen osmotischen Destillation werden die aufzukonzentrierende Flüssigkeit und die Zuglösung nicht von nur einer, sondern von zwei Membranwänden getrennt. Zwischen der ersten Membranwand und der zweiten Membranwand befindet sich der Dampfraum, an den eine Vakuumpumpe angeschlossen sein kann, um den Dampfraum von Fremdgasen zu evakuieren.

Dadurch können die den Stofftransport behindernden Fremdgase abgesaugt wer- den, so dass der Dampfraum im Wesentlichen mit dem aus der aufzukonzentrierenden Flüssigkeit entstandenen Dampf gefüllt ist. Der Druck im Gasraum stellt sich entsprechend der verdampfenden Flüssigkeit ein. Im Ergebnis kann durch die Evakuierung des Dampfraums ein besserer Stoffübergang erzielt werden. Ferner können mit Hilfe der Vakuumpumpe leichtflüchtige Stoffe, welche die Zuglösung verunreinigen könnten, wie z. B. Alkohole, abgezogen werden.

Bei der herkömmlichen thermisch unterstützten osmotischen Destillation finden Wärmeverluste an der Membranwand statt. Demgegenüber ermöglicht die erfindungsgemäße Vorrichtung einen Prozess mit nur sehr geringen Wärmeverlusten durch die ersten und zweiten Membranwände. Im Wesentlichen kann die Vorrichtung so optimiert sein, dass nur die mit dem Stoffübergang einhergehende Latentwärmeübertragung stattfindet. Dies gilt auch für einen thermisch unterstützten Betrieb der Vorrichtung.

Sofern die erste und die zweite Membranwand auf eine jeweilige Stützschicht zur Erhöhung der mechanischen Festigkeit aufgebracht, insbesondere auflaminiert sind, können die erste und zweite Membranwand derart angeordnet sein, dass die Stützschichten sich jeweils auf der Seite des Dampfraums befinden. In diesem Fall sind die aufzukonzentrierende Flüssigkeit und die Zuglösung mit den glatten Seiten der ersten bzw. zweiten Membranwand in Kontakt, wodurch eine erhöhte Polarisation auf einer Flüssigkeitsseite verhindert werden kann.

Während bei der herkömmlichen osmotischen Destillation nur ein Membrantyp verwendet wird, ermöglicht es die Erfindung, unterschiedliche Membrantypen für die erste und zweite Membranwand einzusetzen. Beispielsweise können sich die Membrantypen in Bezug auf Porengröße, Material und/oder Dicke unterscheiden. Die ersten und zweiten Membranwände können demnach individuell an die aufzukonzentrierende Flüssigkeit bzw. die Zuglösung angepasst werden, so dass beispielsweise Benetzungen der Membranwände unterbunden werden. Generell können für die ersten und zweiten Membranwände mikroporöse Materialien verwendet werden, insbesondere Materialien auf der Basis von Polypropylen und/oder Polytetraflourethylen (PTFE). Um zu vermeiden, dass ungewollt durch die mindestens eine erste Membranwand gelangte Flüssigkeit und ungewollt durch die mindestens eine zweite Membranwand gelangte Zuglösung sich vermischen und gegenseitig kontaminieren, ist vorzugsweise im Dampfraum von mindestens einer der osmotischen Destillationsstufen eine Flüssigkeitssperre zwischen der mindestens einen ersten Membranwand und der mindestens einen zweiten Membranwand angeordnet. Wenn Flüssigkeit oder Zuglösung durch die mindestens eine erste bzw. zweite Membranwand gelangt, rinnt diese schwerkraftbedingt die jeweilige Membranwand hinab. Die am Boden des Dampfraums befindliche Flüssigkeitssperre trennt die in den Dampfraum gelangte Flüssigkeit von der in den Dampfraum gelangten Zuglösung.

Bei der Flüssigkeitssperre, die verhindert, dass sich Flüssigkeit und Zuglösung im Dampfraum miteinander vermischen, kann es sich insbesondere um einen Damm handeln, der am Boden des Dampfraums angebracht ist und eine ausreichende Höhe aufweist.

Die Flüssigkeitssperre kann allerdings auch anders ausgestaltet sein. Beispielsweise können ein oder mehrere Ablaufschrägen am Boden des Dampfraums derart angebracht sein, dass die Flüssigkeit und die Zuglösung im Dampfraum nicht miteinander in Kontakt kommen.

Um die ungewollt durch die mindestens eine erste Membranwand gelangte Flüssigkeit wieder dem Prozess zuführen zu können, ist vorteilhafterweise ein erster Flüssigkeitsauslass zur Abfuhr der Flüssigkeit an den Dampfraum angeschlossen ist. Weiterhin kann ein zweiter Flüssigkeitsauslass zur Abfuhr von ungewollt durch die mindestens eine zweite Membranwand gelangter Zuglösung an den Dampfraum angeschlossen sein, der die Wiederverwendung der Zuglösung ermöglicht.

Vorzugsweise sind die Öffnung oder Öffnungen in der Trennwand oder den Trennwänden derart angeordnet, dass keine direkte Sichtverbindung zwischen der mindestens eine ersten Membranwand und der mindestens einen zweiten Membranwand besteht. Bei einer derartigen Anordnung können zwei im Dampfraum vorgesehene Kammern ausreichend sein, um zu verhindern, dass Flüssigkeitstropfen von der mindestens einen ersten Membranwand direkt zu der mindestens einen zweiten Membranwand oder Zuglösungstropfen von der mindestens einen zweiten Membranwand direkt zu der mindestens einen ersten Membranwand fliegen.

Bei herkömmlichen Vorrichtungen zur osmotischen Destillation ist die Übergangsfläche für die aufzukonzentrierende Flüssigkeit und die Zuglösung gleich groß. Die Erfindung ermöglicht es durch die Verwendung von zwei Membranwänden, die Flächen für Verdampfung und Kondensation/Absorption anzupassen. Vorteilhafterweise kann daher die mindestens eine erste Membranwand in mindestens einer der osmotischen Destillationsstufen eine unterschiedliche Oberflächengröße als die mindestens eine zweite Membranwand in derselben osmotischen Destillationsstufe aufweisen. Beispielsweise kann eine vergleichsweise große zweite Membranwand eine größere Fläche für Kondensation/Absorption für den Fall zur Verfügung stellen, wenn die Zuglösung zähflüssig ist oder viele nicht kondensierbare Gase in der aufzukonzentrierenden Flüssigkeit enthalten sind und ausgasen.

Gemäß einer weiteren Ausgestaltung umfasst die Vorrichtung zur osmotischen Destillation mehrere hintereinander geschaltete osmotische Destillationsstufen. Dabei grenzt eine jeweilige nachfolgende osmotische Destillationsstufe mit ihrem die aufzukonzentrierende Flüssigkeit führenden Strömungskanal unmittelbar an den die Zuglösung führenden Strömungskanal der vorangehenden osmotischen Destillationsstufe an. Ferner sind die beiden Strömungskanäle durch eine wärmeleitende, aber flüssigkeits- und gasdichte Trennwand voneinander getrennt. Die wärmeleitende Trennwand bewirkt eine interne Wärmerückgewinnung zur Aufrechterhaltung der treibenden Dampfdruckgefälle. Auf einen externen Wärmetauscher kann in diesem Fall eventuell verzichtet werden.

Eine vorteilhafte Ausgestaltung der erfindungsgemäßen Vorrichtung zur osmotischen Destillation sieht vor, dass in mindestens einer der osmotischen Destillationsstufen der mindestens eine die aufzukonzentrierende Flüssigkeit führende Strömungskanal und der mindestens eine die Zuglösung führende Strömungskanal durch eine wärmeleitende, aber flüssigkeits- und gasdichte Trennwand voneinander getrennt sind und der Dampfraum sich, insbesondere U-förmig, um den die aufzukonzentrierende Flüssigkeit führenden Strömungskanal und den die Zuglösung führenden Strömungskanal und insbesondere um die Trennwand herum erstreckt. Folglich muss Dampf, der durch die mindestens eine erste Membranwand in den Dampfraum diffundiert, außen um die Strömungskanäle und die Trennwand herum strömen, um zu der mindestens einen zweiten Membranwand zu gelangen. Weiterhin kann die vorstehende Ausgestaltung umfassen, dass die mindestens eine der osmotischen Destillationsstufen mehrere die aufzukonzentrierende Flüssigkeit führende Strömungskanäle, mehrere die Zuglösung führende Strömungskanäle sowie mehrere wärmeleitende, aber flüssigkeits- und gasdichte Trennwände aufweist. Die Trennwände trennen jeweils einen der die aufzukonzentrierende Flüssigkeit führenden Strömungskanäle und einen der die Zuglösung führenden Strömungskanäle voneinander. Ferner sind zwei der die aufzukonzentrierende Flüssigkeit führenden Strömungskanäle derart angeordnet, dass sie ein Sammelbecken für ungewollt durch die ersten Membranwände gelangte aufzukonzentrierende Flüssigkeit definieren, und zwei der die Zuglösung führenden Strömungskanäle sind derart angeordnet, dass sie ein Sammelbecken für ungewollt durch die zweiten Membranwände gelangte Zuglösung definieren. Die Strömungskanäle sind bei dieser Ausgestaltung folglich so angeordnet, dass stets zwei Strömungskanäle des gleichen Typs ein Sammelbecken für eine der Prozessflüssigkeiten bilden. Daher kann bei dieser Ausgestaltung auf einen Damm oder Ablaufschrägen oder Ähnliches zum Trennen der Prozessflüssigkeiten verzichtet werden. Ferner bewirken die wärmeleitenden Trennwände zwischen den Strömungskanälen unterschiedlichen Typs eine interne Wärmerückgewinnung.

Vorzugsweise weist die Vorrichtung mehrere hintereinander geschaltete osmotische Destillationsstufen auf und die die aufzukonzentrierende Flüssigkeit führenden Strömungskanäle aufeinander folgender osmotischer Destillationsstufen sind jeweils in Reihe geschaltet. Dazu kann ein Auslass des die aufzukonzentrierende Flüssigkeit führenden Strömungskanals einer jeweiligen vorangehenden osmotischen Destillationsstufe an einen Einlass des die aufzukonzentrierende Flüssigkeit führenden Strömungskanals der nachfolgenden osmotischen Destillationsstufe angeschlossen sein. Weiterhin können auch die die Zuglösung führenden Strömungskanäle aufeinander folgender osmotischer Destillationsstufen jeweils in Reihe geschaltet sein. Um den Verbrauch an Zuglösung so gering wie möglich zu halten, weist die Vorrichtung bevorzugt ein Rezirkulationssystem zur Rezirkulation der Zuglösung auf. Das Rezirkulationssystem führt zumindest einen Teil der Zuglösung, welche mindestens eine der osmotischen Destillationsstufen durchlaufen hat, erneut der mindestens einen osmotischen Destillationsstufe zu.

Insbesondere enthält das Rezirkulationssystem eine Regenerationseinheit zur Regeneration der Zuglösung. Die Regeneration der Zuglösung kann beispielsweise mittels Membrandestillation, Rückwärtsosmose oder anderen thermischen Verfahren und insbesondere in Kombination mit thermischer oder mechanischer Dampfverdichtung erfolgen.

Um größere Volumenströme abarbeiten zu können, umfasst mindestens eine der osmotischen Destillationsstufen vorteilhafterweise mehrere zueinander parallele, die aufzukonzentrierende Flüssigkeit führende Strömungskanäle. Die mehreren zueinander parallelen Strömungskanäle sind durch eine jeweilige dampfdurchlässige und flüssigkeitsdichte erste Membranwand vom Dampfraum getrennt. Außerdem umfasst mindestens eine der osmotischen Destillationsstufen vorteilhafter- weise mehrere zueinander parallele, die Zuglösung führende Strömungskanäle, wobei die mehreren zueinander parallelen Strömungskanäle durch eine jeweilige dampfdurchlässige und flüssigkeitsdichte zweite Membranwand vom Dampfraum getrennt sind. Die vorstehend beschriebene Vorrichtung kann beispielsweise als Plattenmodul realisiert sein, das aus mehreren, miteinander reibverschweißten Kunststoff rahmen besteht. Die Rahmen enthalten Öffnungen, die nach dem Reibschweißprozess Strömungskanäle für die verschiedenen Fluide bilden. Ferner sind dampfdurchlässige und flüssigkeitsdichte erste und zweite Membranwände sowie gegebenenfalls wärmleitende, aber flüssigkeits- und gasdichte Trennwände an den Rahmen befestigt. Die Vorrichtung kann aber auch anders aufgebaut sein, z. B. als Wickel-, Rohr-, Hohlfaser- oder Kapillarmodul.

Die vorstehend beschriebene Vorrichtung lässt sich in vorteilhafter Weise zur Aufkonzentrierung von Lebensmitteln einsetzen, insbesondere Fruchtsaft, alkoholfreiem Bier, alkoholfreiem Wein oder anderen alkoholfreien Getränken. Die Erfindung ermöglicht eine schonende Konzentration der Lebensmittel bei Raumtemperatur. Die Aromastoffe verbleiben in den Lebensmittel und nur Wasser wird von der Zuglösung absorbiert, welche anschließend regeneriert werden kann.

Die vorstehend beschriebene Vorrichtung kann weiterhin zur Aufkonzentrierung von Lebensmitteln, insbesondere Fruchtsaft, alkoholfreiem Bier, alkoholfreiem Wein oder anderen alkoholfreien Getränken, bestimmt sein und ist in diesem Fall eine Lebensmittelaufkonzentrierungsvorrichtung.

Außerdem kann die vorstehend beschriebene Vorrichtung zur Senkung der Konzentration eines in der aufzukonzentrierenden Flüssigkeit gelösten Stoffs, insbesondere Ammonium, verwendet werden. In diesem Fall diffundiert der Stoff in Dampfform durch die mindestens eine erste Membranwand in den Dampfraum und gelangt aus dem Dampfraum durch die mindestens eine zweite Membranwand in die Zuglösung, in welcher er kondensiert. Durch die Senkung der Konzentration des Stoffs in der aufzukonzentrierenden Flüssigkeit werden die Konzentrationen der übrigen Bestandteile dieser Flüssigkeit erhöht.

Für den Fall, dass Ammonium aus einer Flüssigkeit entfernt oder zumindest die Ammoniumkonzentration in der Flüssigkeit gesenkt werden soll, wird diese Flüssigkeit durch den mindestens einen die aufzukonzentrierende Flüssigkeit führenden Strömungskanal geführt. Als Zuglösung kann eine saure Lösung verwendet werden, die durch den mindestens einen die Zuglösung führenden Strömungskanal strömt. Als Zuglösung eignen sich insbesondere Schwefelsäure oder Oxalsäure.

Die oben beschriebene Aufgabenstellung wird des Weiteren gelöst durch ein Verfahren zur osmotischen Destillation, bei dem eine aufzukonzentrierende Flüssigkeit und eine Zuglösung durch eine oder mehrere osmotische Destillationsstufen geführt werden. Jede osmotische Destillationsstufe weist einen Dampfraum auf, der durch mindestens eine dampfdurchlässige und flüssigkeitsdichte erste Membranwand von der aufzukonzentrierenden Flüssigkeit getrennt ist und der durch mindestens eine dampfdurchlässige und flüssigkeitsdichte zweite Membranwand von der Zuglösung getrennt ist. Das Verfahren umfasst, dass
(a) die aufzukonzentrierende Flüssigkeit entlang der mindestens einen ersten Membranwand geführt wird,
(b) die Zuglösung entlang der mindestens einen zweiten Membranwand geführt wird, und
(c) ein aus der aufzukonzentrierenden Flüssigkeit entstehender Dampf durch die mindestens eine erste Membranwand in den Dampfraum diffundiert und Dampf aus dem Dampfraum durch die mindestens eine zweite Membranwand in die Zuglösung diffundiert und dort kondensiert.

Das erfindungsgemäße Verfahren kann sämtliche oben im Zusammenhang mit der erfindungsgemäßen Vorrichtung aufgeführte Ausgestaltungen umfassen.

Die Erfindung wird nachfolgend anhand von Ausführungsbeispielen unter Bezug auf die Zeichnungen näher erläutert. In diesen zeigen:

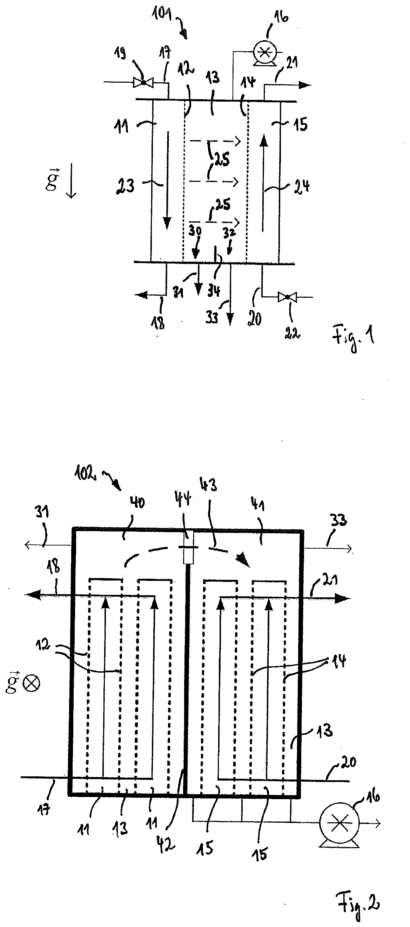

Fig. 1 eine schematische Darstellung einer beispielhaften nicht unter die Erfindung fallenden Vorrichtung zur osmotischen Destillation mit einem eine aufzukonzentrierende Flüssigkeit führenden Strömungskanal, einem von dem Strömungskanal durch eine erste Membranwand getrennten Dampfraum, einem von dem Dampfraum durch eine zweite Membranwand getrennten, eine Zuglösung führenden Strömungskanal sowie einem im Dampfraum angeordneten Damm; eine schematische Darstellung einer beispielhaften Ausführungsform einer Vorrichtung zur osmotischen Destillation mit einem durch eine Trennwand in zwei Kammern unterteilten, labyrinthartigen Dampfraum; eine schematische Darstellung einer beispielhaften Ausführungsform einer Vorrichtung zur osmotischen Destillation mit zwei hintereinander geschalteten osmotischen Destillationsstufen und einem externen Wärmetauscher; eine schematische Darstellung einer beispielhaften Ausführungsform einer Vorrichtung zur osmotischen Destillation mit drei hintereinander geschalteten osmotischen Destillationsstufen und interner Wärmerückgewinnung; eine schematische Darstellung einer beispielhaften Ausführungsform einer Vorrichtung zur osmotischen Destillation mit einem Rezirkulationssystem für die Zuglösung; eine schematische Darstellung einer beispielhaften Ausführungsform einer Vorrichtung zur osmotischen Destillation mit interner Wärmerückgewinnung und ohne Damm zum Trennen von in den Dampfraum gelangten Leckageflüssigkeiten; eine schematische Darstellung einer beispielhaften Ausführungsform einer Vorrichtung zur osmotischen Destillation mit Rezirkulationssystemen für die aufzukonzentrierende Flüssigkeit und die Zuglösung; und

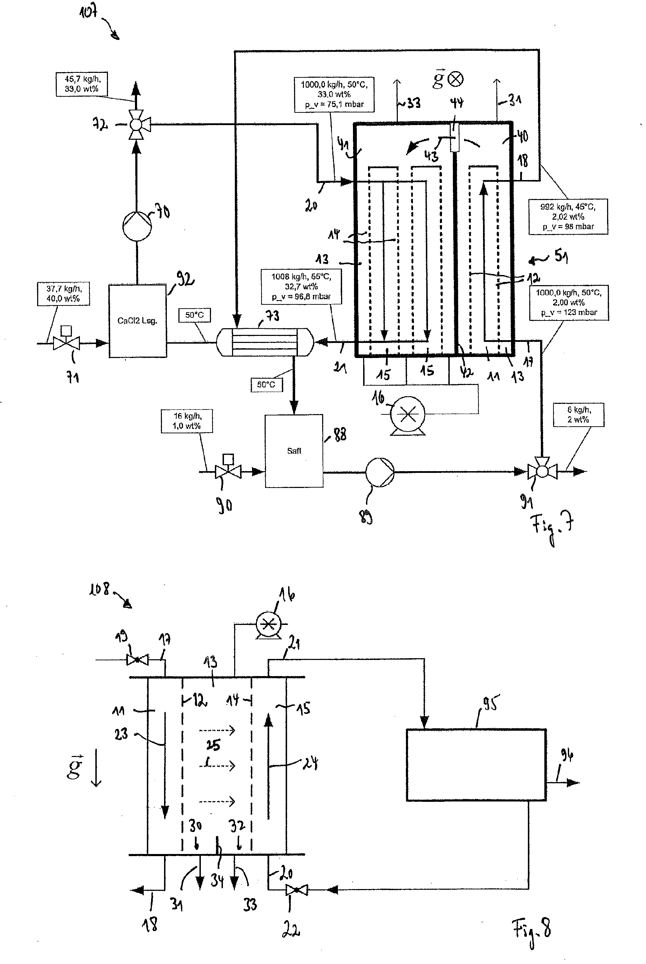

Fig. 8 eine schematische Darstellung einer beispielhaften nicht unter die Erfindung fallenden Vorrichtung zur osmotischen Destillation mit einer Regenerationseinheit für die Zuglösung.

Fig. 1 zeigt in einer schematischen Seitenansicht eine beispielhafte nicht unter die Erfindung fallende Vorrichtung 101 zur osmotischen Destillation mit einer osmotischen Destillationsstufe. Ein Vektor g zeigt in Fig. 1 sowie allen weiteren Figuren die Richtung der Schwerkraft an.

Die Vorrichtung 101 enthält einen Strömungskanal 1 1 und einen durch eine mikroporöse, dampfdurchlässige, jedoch flüssigkeitsundurchlässige erste Membranwand 12 von dem Strömungskanal 1 1 getrennten Dampfraum 13. Auf der der ersten Membranwand 12 gegenüberliegenden Seite ist der Dampfraum 13 durch eine mikroporöse, dampfdurchlässige, jedoch flüssigkeitsundurchlässige zweite Membranwand 14 begrenzt. Die zweite Membranwand 14 trennt einen Strömungskanal 15 vom Dampfraum 13. An den Dampfraum 13 ist eine Vakuumpumpe 16 angeschlossen, mit welcher der Dampfraum 13 evakuiert werden kann.

Der Strömungskanal 1 1 ist mit einem Einlass 17 und einem Auslass 18 versehen, an denen eine aufzukonzentrierende Flüssigkeit dem Strömungskanal 1 1 zugeführt bzw. von dem Strömungskanal 1 1 abgeführt werden kann. Dem Einlass 17 ist ein steuerbares Ventil 19 vorgeschaltet, um den Zufluss der aufzukonzentrierenden Flüssigkeit zum Strömungskanal 1 1 steuern zu können. In analoger Weise weist der Strömungskanal 15 einen Einlass 20 und einen Auslass 21 auf, an denen eine Zuglösung dem Strömungskanal 15 zugeführt bzw. von dem Strömungskanal 15 abgeführt werden kann. Ferner ist stromaufwärts von dem Einlass 20 ein steuerbares Ventil 22 vorgesehen, mit dessen Hilfe sich der Zufluss der Zuglösung zum Strömungskanal 15 steuern lässt.

Die Strömungsrichtungen der aufzukonzentrierenden Flüssigkeit und der Zuglösung durch die Strömungskanäle 1 1 bzw. 15 ist in Fig. 1 durch Pfeile 23, 24 gekennzeichnet. In der vorliegenden Ausführungsform werden die aufzukonzentrierende Flüssigkeit und die Zuglösung im Gegenstrom durch die Strömungskanäle 1 1 bzw. 15 geführt. Es ist jedoch auch denkbar, die aufzukonzentrierende Flüssigkeit und die Zuglösung in gleicher Richtung an der ersten Membranwand 12 bzw. der zweiten Membranwand 14 vorbeizuführen.

Bei der osmotischen Destillation wird ein Teil der aufzukonzentrierenden Flüssigkeit verdampft und wieder kondensiert. Bei der teilweisen Verdampfung der aufzukonzentrierenden Flüssigkeit, bei der es sich um ein Gemisch unterschiedlicher Flüssigkeiten, eine Lösung oder Emulsion handeln kann, verdampfen bei gegebener Temperatur die jeweiligen Bestandteile bei einem von dieser Temperatur abhängigen Dampfdruck, so dass einzelne Bestandteile auskondensiert werden können. Durch Temperatur- bzw. Dampfdruckunterschiede zwischen der aufzukonzentrierenden Flüssigkeit und dem Dampfraum 13 entsteht im Strömungskanal 1 1 an der Grenzfläche zwischen der aufzukonzentrierenden Flüssigkeit und der ersten Membranwand 12 Dampf, der durch die erste Membranwand 12 in den unmittelbar an die erste Membranwand 12 angrenzenden Dampfraum 13 hindurchtritt. Der Dampf strömt im Dampfraum 13, wie in Fig. 1 durch Pfeile 25 dargestellt ist, zur zweiten Membranwand 14. Sofern der Dampfdruck des übergehenden, dampfförmigen Stoffs in der Zuglösung niedriger ist als im Dampfraum 13, tritt der Dampf vom Dampfraum 13 durch die zweite Membranwand 14 in den unmittelbar an die zweite Membranwand 14 angrenzenden Strömungskanal 15 und kondensiert dort. Der Massentransport des von der aufzukonzentrierenden Flüssigkeit zur Zuglösung übergehenden Stoffs ist größer, wenn die Zuglösung einen möglichst niedrigen Dampfdruck des übergehenden Stoffs hat. Dies ist normalerweise bei höheren Konzentrationen oder niedrigeren Temperaturen der Fall.

Es ist möglich, dass die durch den Strömungskanal 1 1 fließende aufzukonzentrierende Flüssigkeit aufgrund von Leckage durch die erste Membranwand 12 hindurchtritt. Die so in den Dampfraum 13 gelangte Flüssigkeit läuft schwerkraftbedingt die erste Membranwand 12 hinab und gelangt von dort in ein im unteren Bereich des Dampfraums 13 angeordnetes Sammelbecken 30, welches an seinem Boden einen Flüssigkeitsauslass 31 aufweist, durch den die durch Leckage in den Dampfraum 13 gelangte Flüssigkeit abgeführt werden kann.

In gleicher Weise kann auch die durch den Strömungskanal 15 fließende Zuglösung ungewollt durch die zweite Membranwand 14 hindurchtreten. Zum Aufsammeln der durch die zweite Membranwand 14 gelangten Zuglösung ist im unter Bereich des Dampfraums 13 ein Sammelbecken 32 angeordnet. Das Sammelbecken 32 weist an seinem Boden einen Flüssigkeitsauslass 33 auf, um die durch Leckage in den Dampfraum 13 gelangte Zuglösung abführen zu können.

Die Sammelbecken 30, 32 sind durch einen Damm 34 voneinander getrennt, der verhindert, dass durch Leckage in den Dampfraum 13 gelangte Flüssigkeit und Zuglösung einander vermischen.

Fig. 2 zeigt in einer schematischen Draufsicht eine beispielhafte Ausführungsform einer Vorrichtung 102 zur osmotischen Destillation, bei welcher der Dampfraum 13 durch zwei Kammern 40, 41 realisiert ist. In der Kammer 40 befinden sich mehrere parallel geschaltete, die aufzukonzentrierende Flüssigkeit führende Strömungskanäle 1 1 . Die Strömungskanäle 1 1 sind durch erste Membranwände 12 von dem Dampfraum 13 getrennt. In der Kammer 41 befinden sich mehrere parallel geschaltete, die Zuglösung führende Strömungskanäle 15, die durch zweite Membranwände 14 von dem Dampfraum 13 getrennt sind. Zwischen den Kammern 40, 41 befinden sich eine flüssigkeits- und gasdichte Trennwand 42, die eine Öffnung aufweist, durch die - wie durch einen Pfeil 43 dargestellt - der durch die ersten Membranwände 12 hindurchdiffundierende Dampf von der Kammer 40 in die Kammer 41 strömen und von dort durch die zweiten Membranwände 14 in die Strömungskanäle 15 diffundieren und dort kondensieren kann.

Unterhalb der in der Trennwand 42 vorgesehenen Öffnung befindet sich ein Damm 44, der den Durchtritt von in der Kammer 40 angesammelter Flüssigkeit durch die Öffnung verhindert. Ferner sind an die Kammern 40, 41 Flüssigkeitsauslässe 31 , 33 zur Abfuhr der durch die jeweiligen Membranwände 12 bzw. 14 hindurchgetretenen Flüssigkeit und Zuglösung angeschlossen.

Die Öffnung in der Trennwand 42 ist versetzt zu den ersten und zweiten Membranwänden 12 und 14 angeordnet, so dass keine direkte Sichtverbindung zwischen den ersten Membranwänden 12 und den zweiten Membranwänden 14 besteht. Dadurch wird ein Tropfenflug von einer der ersten Membranwände 12 zu einer der zweiten Membranwände 14 und in umgekehrter Richtung verhindert.

Eine labyrinthartige Führung des Dampfs von den ersten Membranwänden 12 zu den zweiten Membranwänden 14 kann auch anders als in Fig. 2 gezeigt realisiert werden. Beispielsweise kann der Dampfraum 13 mehr als zwei in Reihe geschaltete Kammern umfassen. Die Öffnungen in den zwischen benachbarten Kammern angeordneten Trennwänden können versetzt zueinander angeordnet sein, um dadurch einen Tropfenflug von den ersten Membranwänden 12 zu den zweiten Membranwänden 14 und in umgekehrter Richtung zu unterbinden.

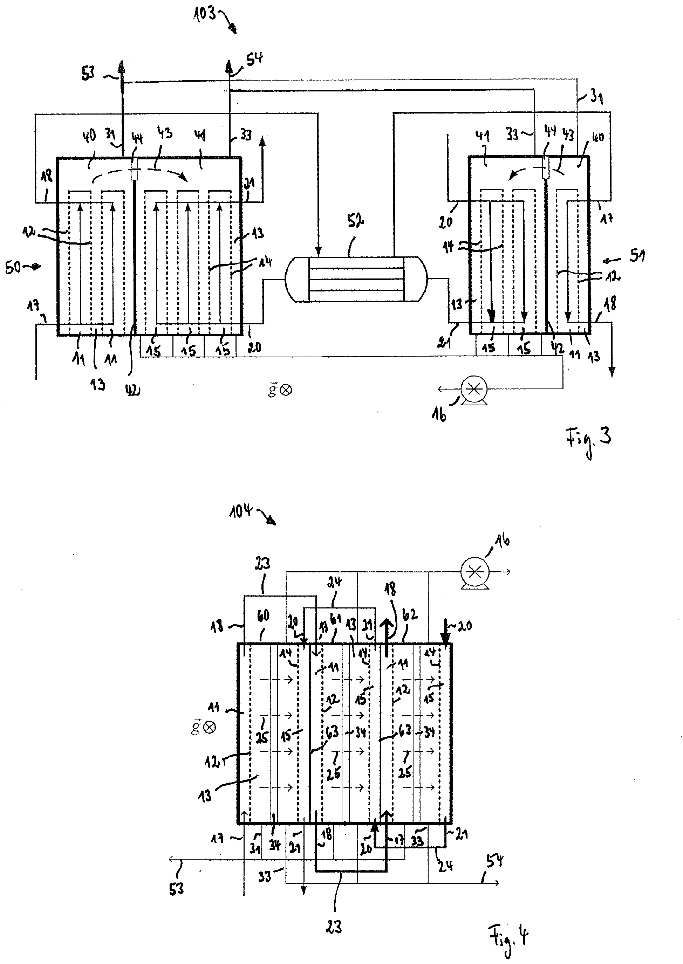

Fig. 3 zeigt in einer schematischen Draufsicht eine beispielhafte Ausführungsform einer Vorrichtung 103 zur osmotischen Destillation mit zwei osmotischen Destillationsstufen 50, 51 . Jede der osmotischen Destillationsstufen 50, 51 ist analog zur in Fig. 2 gezeigten Vorrichtung 102 zur osmotischen Destillation aufgebaut, wobei die osmotische Destillationsstufe 50 zwei parallel geschaltete, die aufzukonzentrierende Flüssigkeit führende Strömungskanäle 1 1 und drei parallel geschaltete, die Zuglösung führende Strömungskanäle 15 aufweist, während die osmotische Destillationsstufe 51 einen die aufzukonzentrierende Flüssigkeit führenden Strömungskanal 1 1 und zwei parallel geschaltete, die Zuglösung führende Strömungskanäle 15 enthält.

Ferner sind die die aufzukonzentrierende Flüssigkeit führenden Strömungskanäle 1 1 der osmotischen Destillationsstufen 50, 51 in Reihe geschaltet. Dazu ist der Auslass 18 der Strömungskanäle 1 1 der osmotischen Destillationsstufe 50 über einen externen Wärmetauscher 52 mit dem Einlass 17 des Strömungskanals 1 1 der osmotischen Destillationsstufe 51 verbunden. In gleicher Weise sind die die Zuglösung führenden Strömungskanäle 15 der osmotischen Destillationsstufen 50, 51 in Reihe geschaltet, wobei der Auslass 21 der Strömungskanäle 15 der osmotischen Destillationsstufe 51 über den externen Wärmetauscher 52 mit dem Einlass 20 der Strömungskanäle 15 der osmotischen Destillationsstufe 50 verbunden ist.

Die Flüssigkeitsauslässe 31 , 33 der osmotischen Destillationsstufen 50, 51 sind jeweils miteinander verbunden und führen zu einem gemeinsamen Flüssigkeitsauslass 53 bzw. 54. Die an den gemeinsamen Flüssigkeitsauslässen 53, 54 abfließende Flüssigkeit und Zuglösung können beispielsweise im Prozess wiederverwendet werden.

Die aufzukonzentrierende Flüssigkeit wird während des Prozesses zunächst den Strömungskanälen 1 1 der osmotischen Destillationsstufe 50 zugeführt. Aufgrund der geringen Konzentration der aufzukonzentrierenden Flüssigkeit in der osmotischen Destillationsstufe 50 ist der Volumenstrom der aufzukonzentrierenden Flüssigkeit dort groß und die osmotische Destillationsstufe 50 enthält eine entsprechend große Anzahl von Strömungskanälen 1 1 . Durch den Prozess verringert sich der Volumenstrom der aufzukonzentrierenden Flüssigkeit, so dass in der osmotischen Destillationsstufe 51 nur eine vergleichsweise geringe Anzahl von Strömungskanälen benötigt wird.

Durch den Stoffübergang von der aufzukonzentrierenden Flüssigkeit auf die Zuglösung kühlt die aufzukonzentrierende Flüssigkeit während des Prozesses ab und die Zuglösung erwärmt sich. Zur Aufrechterhaltung des Prozesses muss der aufzukonzentrierenden Flüssigkeit thermische Energie zugeführt und der Zuglösung thermische Energie entzogen werden. Diese Funktion erfüllt der externe Wärmetauscher 52, in dem der Zuglösung thermische Energie entzogen wird und diese Energie dazu genutzt wird, die aufzukonzentrierende Flüssigkeit zu erwärmen.

Fig. 4 zeigt in einer schematischen Draufsicht eine beispielhafte nicht unter die Erfindung fallende Vorrichtung 104 zur osmotischen Destillation mit drei osmotischen Destillationsstufen 60, 61 und 62. Die osmotischen Destillationsstufen 60 bis 62 sind identisch aufgebaut und weisen jeweils einen die aufzukonzentrierende Flüssigkeit führenden Strömungskanal 11 auf, welcher durch eine mikroporöse, dampfdurchlässige, jedoch flüssigkeitsundurchlässige erste Membranwand 12 von einem Dampfraum 13 getrennt ist. Auf der der ersten Membranwand 12 gegenüberliegenden Seite ist der Dampfraum 13 durch eine mikroporöse, dampfdurchlässige, jedoch flüssigkeitsundurchlässige zweite Membranwand 14 von einem die Zuglösung führenden Strömungskanal 15 getrennt. Am Boden des Dampfraums 13 befindet sich ein Damm 34, der verhindert, dass durch Leckage in den Dampfraum 13 gelangte Flüssigkeit und Zuglösung einander vermischen.

Die die aufzukonzentrierende Flüssigkeit führenden Strömungskanäle 11 und die die Zuglösung führenden Strömungskanäle 15 der osmotischen Destillationsstufen 60 bis 62 sind jeweils in Reihe geschaltet. Ferner sind die Flüssigkeitsauslässe 31 und 33 der osmotischen Destillationsstufen 60 bis 62 jeweils miteinander verbunden und führen zu einem gemeinsamen Flüssigkeitsauslass 53 bzw. 54. Die osmotische Destillationsstufe 60 grenzt mit ihrem die Zuglösung führenden Strömungskanal 15 unmittelbar an den die aufzukonzentrierende Flüssigkeit führenden Strömungskanal 11 der nachfolgenden osmotischen Destillationsstufe 61 an. Die beiden Strömungskanäle 11, 15 sind durch eine wärmeleitende, aber flüssigkeits- und gasdichte Trennwand 63 getrennt. In gleicher Weise grenzt der die Zuglösung führende Strömungskanal 15 der osmotischen Destillationsstufe 61 unmittelbar an den die aufzukonzentrierende Flüssigkeit führenden Strömungskanal 1 1 der nachfolgenden osmotischen Destillationsstufe 62 an, wobei die beiden Strömungskanäle 1 1 , 15 wiederum durch eine wärmeleitende, aber flüssigkeits- und gasdichte Trennwand 63 getrennt sind.

Während des Prozesses wird die aufzukonzentrierende Flüssigkeit zunächst der osmotischen Destillationsstufe 60 zugeführt und durchläuft anschließend sukzessive die osmotischen Destillationsstufen 61 und 62. Dabei erhöht sich allmählich die Konzentration der aufzukonzentrierenden Flüssigkeit, was in Fig. 4 durch dicker werdende Pfeile 23 gekennzeichnet ist. Die Zuglösung wird der osmotischen Destillationsstufe 62 zugeführt und durchläuft anschließend sukzessive die osmotischen Destillationsstufen 61 und 60.

Im Unterschied zu der in Fig. 3 dargestellten Vorrichtung 103 erfolgt bei der Vorrichtung 104 die Wärmeübertragung intern, indem thermische Energie von der Zuglösung in einem jeweiligen Strömungskanal 15 durch die wärmeleitende Trennwand 63 auf die durch den direkt benachbarten Strömungskanal 1 1 fließende aufzukonzentrierende Flüssigkeit übertragen wird. In der Vorrichtung 104 ist der interne Wärmetausch im Gleichstrom ausgeführt, er kann aber auch im Gegenstrom erfolgen.

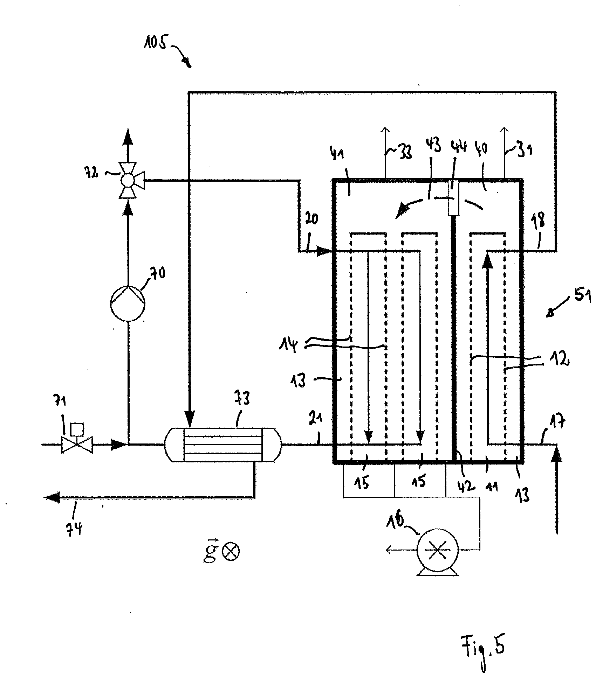

Fig. 5 zeigt in einer schematischen Draufsicht eine beispielhafte Ausführungsform einer Vorrichtung 105 zur osmotischen Destillation mit einem Rezirkulationssystem für die Zuglösung. Beispielhaft enthält die Vorrichtung 105 die aus Fig. 3 bekannte osmotische Destillationsstufe 51 . Ferner umfasst die Vorrichtung 105 eine Pumpe 70, um die Zuglösung durch das Rezirkulationssystem pumpen zu können. Außerdem sind ein Ventil 71 , mit welchem dem Rezirkulationssystem Zuglösung hinzugefügt werden kann, und ein Ventil 72, mit welchem dem Rezirkulationssystem Zuglösung entnommen werden kann, vorgesehen. Weiterhin ist ein externer Wärmetauscher 73 in das Rezirkulationssystem geschaltet.

Fig. 5 zeigt den Fall, dass die Zuglösung eine größere Aufnahmekapazität hat als die aufzukonzentrierende Flüssigkeit. Hier wird die erwärmte Zuglösung durch die abgekühlte aufzukonzentrierende Flüssigkeit in dem externen Wärmetauscher 73 gekühlt. Nach dem Durchlaufen des externen Wärmetauschers 73 wird die aufzukonzentrierende Flüssigkeit an einem Auslass 74 abgeführt. Weiterhin kann auch ein Rezirkulationssystem für die aufzukonzentrierende Flüssigkeit vorgesehen sein, um diese höher zu konzentrieren.

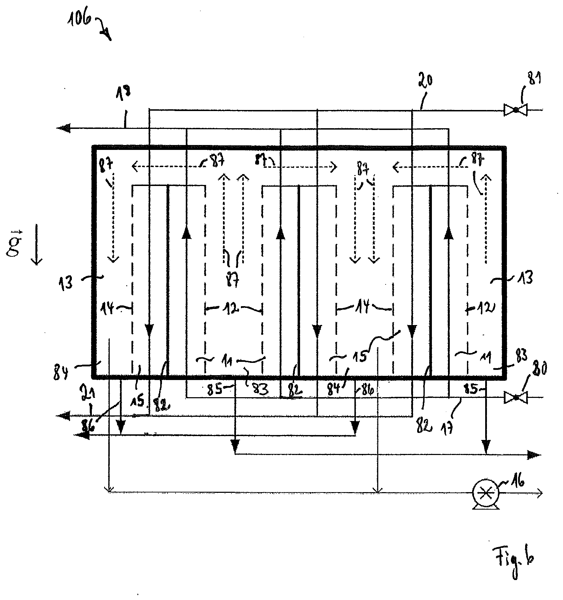

Fig. 6 zeigt in einer schematischen Seitenansicht eine beispielhafte nicht unter die Erfindung fallende Vorrichtung 106 zur osmotischen Destillation mit einer internen Wärmerückgewinnung, bei welcher kein Damm zum Trennen der in den Dampfraum 13 durch Leckage gelangten Flüssigkeit und Zuglösung benötigt wird.

Die Vorrichtung 106 enthält mehrere parallel geschaltete Strömungskanäle 11 und mehrere parallel geschaltete Strömungskanäle 15, die durch erste Membranwände 12 bzw. zweite Membranwände 14 vom Dampfraum 13 getrennt sind. Am Ein- lass 17 wird den Strömungskanälen 11 die aufzukonzentrierende Flüssigkeit zugeführt und am Auslass 18 wird diese abgeführt. Die Zuglösung wird den Strömungskanälen 15 am Einlass 20 zugeführt und am Auslass 21 wird die Zuglösung entnommen. Ferner sind den Einlässen 17, 20 Ventile 80 bzw. 81 vorgeschaltet, mit welchen der Zufluss der aufzukonzentrierenden Flüssigkeit bzw. der Zuglösung gesteuert werden kann. Jeweils ein Strömungskanal 11 und ein Strömungskanal 15 sind durch eine wärmeleitende, aber flüssigkeitsund gasdichte Trennwand 82 voneinander getrennt. Die Strömungskanäle 11 und 15 befinden sich unmittelbar benachbart zu der Trennwand 82, so dass eine interne Wärmeübertragung zwischen der aufzukonzentrierenden Flüssigkeit und der Zuglösung möglich ist.

Zwischen benachbarten Trennwänden 82 sind in abwechselnder Reihenfolge nur Strömungskanäle 1 1 oder nur Strömungskanäle 15 angeordnet. Diese Maßnahme verhindert, dass sich die aufzukonzentrierende Flüssigkeit und die Zuglösung, die durch Leckage in den Dampfraum 13 gelangt sind, miteinander vermischen. Aufgrund dieser Anordnung ist kein zusätzlicher Damm zum Trennen der Leckageflüssigkeiten erforderlich. Die Strömungskanäle 11 sind derart angeordnet, dass jeweils zwei Strömungskanäle 11 oder ein Strömungskanal 11 und eine Außenwand der Vorrichtung 106 ein Sammelbecken 83 für die aufgrund von Leckage durch die erste Membranwände 12 gelangte aufzukonzentrierende Flüssigkeit bilden. In analoger Weise bilden jeweils zwei Strömungskanäle 15 oder ein Strömungskanal 15 und eine Außenwand der Vorrichtung 106 ein Sammelbecken 84 für die aufgrund von Leckage durch die zweiten Membranwände 14 gelangte Zuglösung.

Am Boden eines jeweiligen Sammelbeckens 83 ist einen Flüssigkeitsauslass 85 vorgesehen, durch den die durch Leckage in den Dampfraum 13 gelangte aufzukonzentrierende Flüssigkeit abgeführt werden kann. Ferner weisen die Sammelbecken 84 an ihrem Boden jeweils einen Flüssigkeitsauslass 86 auf, durch den die durch Leckage in den Dampfraum 13 gelangte Zuglösung abgeführt werden kann.

In der Vorrichtung 106 sind die Trennwände 82 so angeordnet, dass sie nach oben hin Öffnungen bilden, durch welche der durch die ersten Membranwände 12 diffundierte Dampf zu den zweiten Membranwänden 14 strömen kann. Die Strömungsrichtung des Dampfs ist in Fig. 6 durch Pfeile 87 gekennzeichnet.

Fig. 7 zeigt in einer schematischen Draufsicht eine beispielhafte Ausführungsform einer Vorrichtung 107 zur osmotischen Destillation, die eine Weiterbildung der Vorrichtung 105 aus Fig. 5 darstellt. Neben dem Rezirkulationssystem für die Zuglösung weist die in Fig. 7 dargestellte Vorrichtung 107 ein Rezirkulationssystem für die aufzukonzentrierende Flüssigkeit auf. Das Rezirkulationssystem für die aufzukonzentrierende Flüssigkeit umfasst einen Behälter 88 für die aufzukonzentrierende Flüssigkeit, eine Pumpe 89, ein Ventil 90, mit welchem dem Behälter 88 aufzukonzentrierende Flüssigkeit hinzugefügt werden kann, und ein Ventil 91 , mit welchem dem Rezirkulationssystem aufzukonzentrierende Flüssigkeit entnommen werden kann. Ferner umfasst das Rezirkulationssystem für die Zuglösung einen Behälter 92 für die Zuglösung.

In dem vorliegenden Beispiel wird ein Fruchtsaftstrom bei 50 °C auf die doppelte Konzentration an gelösten Stoffen konzentriert. Als Zuglösung wird eine CaC - Lösung verwendet. An verschiedenen Stellen sind in Fig. 7 beispielhafte Werte für den Massenstrom (in kg/h), die Temperatur (in °C), die Konzentration (in Gew.-%) und/oder den Dampfpartialdruck (in mbar) der jeweiligen Flüssigkeit angegeben.

Fig. 8 zeigt in einer schematischen Draufsicht eine beispielhafte nicht unter die Erfindung fallende Vorrichtung 108 zur osmotischen Destillation, die eine Weiterbildung der Vorrichtung 101 aus Fig. 1 darstellt. Die Vorrichtung 108 weist zusätzlich eine Regenerationseinheit 95 auf, mit welcher sich die Zuglösung regenerieren lässt. Eingangsseitig ist die Regenerationseinheit 95 mit dem Auslass 21 des die Zuglösung führenden Strömungskanals 15 verbunden und ausgangsseitig speist die Regenerationseinheit 95 den Einlass 20 des Strömungskanals 15. Die Regenerationseinheit 108 führt eine Aufkonzentration der durch den Prozess verdünnten Zuglösung durch. Die Regeneration der Zuglösung kann beispielsweise mittels Membrandestillation, Rückwärtsosmose oder anderen thermischen Verfahren und insbesondere in Kombination mit thermischer oder mechanischer Dampfverdichtung erfolgen. Die von der Zuglösung während des Prozesses aufgenommene und bei der Regeneration der Zuglösung wieder entnommene Flüssigkeit kann an einem Auslass 96 der Regenerationseinheit 95 abgeführt werden.

Die in den Figuren 1 bis 8 dargestellten Vorrichtungen 101 bis 108 lassen sich insbesondere zur Aufkonzentrierung von Lebensmitteln, wie z. B. Fruchtsäften oder anderen alkoholfreien Getränken, insbesondere alkoholfreiem Bier oder alkoholfreiem Wein, einsetzen. Die Vorrichtungen 101 bis 108 ermöglichen eine schonende Konzentration der Lebensmittel bei Raumtemperatur. Die Aromastoffe verbleiben im Saft oder den Getränken und nur Wasser wird von der Zuglösung absorbiert, welche anschließend - wie in Fig. 8 gezeigt - regeneriert werden kann.

### Bezugszeichenliste

- 11: Strömungskanal
- 12: erste Membranwand
- 13: Dampfraum
- 14: zweite Membranwand
- 15: Strömungskanal
- 16: Vakuumpumpe
- 17: Einlass
- 18: Auslass
- 19: Ventil
- 20: Einlass
- 21: Auslass
- 22: Ventil
- 23: Pfeil
- 24: Pfeil
- 25: Pfeil
- 30: Sammelbecken
- 31: Flüssigkeitsauslass
- 32: Sammelbecken
- 33: Flüssigkeitsauslass
- 34: Damm
- 40: Kammer
- 41: Kammer
- 42: Trennwand
- 43: Pfeil
- 44: Damm
- 50: Destillationsstufe
- 51: Destillationsstufe
- 52: Wärmetauscher
- 53: Flüssigkeitsauslass
- 54: Flüssigkeitsauslass
- 60: Destillationsstufe
- 61: Destillationsstufe
- 62: Destillationsstufe
- 63: Trennwand
- 70: Pumpe
- 71: Ventil
- 72: Ventil
- 73: Wärmetauscher
- 74: Auslass
- 80: Ventil
- 81: Ventil
- 82: Trennwand
- 83: Sammelbecken
- 84: Sammelbecken
- 85: Flüssigkeitsauslass
- 86: Flüssigkeitsauslass
- 87: Pfeil
- 88: Behälter
- 89: Pumpe
- 90: Ventil
- 91: Ventil
- 92: Behälter
- 95: Regenerationseinheit
- 96: Auslass
- 101: Vorrichtung
- 102: Vorrichtung
- 103: Vorrichtung
- 104: Vorrichtung
- 105: Vorrichtung
- 106: Vorrichtung
- 107: Vorrichtung
- 108: Vorrichtung
- g: Richtung der Schwerkraft

## Patentansprüche

1. Vorrichtung (101 -108) zur osmotischen Destillation mit einer oder mehreren osmotischen Destillationsstufen, wobei jede osmotische Destillationsstufe mindestens einen eine aufzukonzentrierende Flüssigkeit führenden Strömungskanal (11) und mindestens einen eine Zuglösung führenden Strömungskanal (15) aufweist,
wobei jede osmotische Destillationsstufe einen Dampfraum (13) aufweist, der durch mindestens eine dampfdurchlässige und flüssigkeitsdichte erste Membranwand (12) von dem mindestens einen die aufzukonzentrierende Flüssigkeit führenden Strömungskanal (11) getrennt ist und der durch mindestens eine dampfdurchlässige und flüssigkeitsdichte zweite Membranwand (14) von dem mindestens einen die Zuglösung führenden Strömungskanal (15) getrennt ist, so dass ein aus der aufzukonzentrierenden Flüssigkeit entstehender Dampf durch die mindestens eine erste Membranwand (12) in den Dampfraum (13) gelangt und Dampf aus dem Dampfraum (13) durch die mindestens eine zweite Membranwand (14) in die Zuglösung gelangt und dort kondensiert,
**dadurch gekennzeichnet, dass**
der Dampfraum (13) von mindestens einer der osmotischen Destillationsstufen mehrere in einer Reihe angeordnete Kammern (40, 41) umfasst, wobei benachbarte Kammern (40, 41) durch eine jeweilige flüssigkeits- und gasdichte Trennwand (42) voneinander getrennt sind und jede Trennwand (42) eine für den Dampfdurchlässige Öffnung aufweist, wobei bevorzugt mindestens eine Flüssigkeitssperre (44), insbesondere ein Damm, vorgesehen ist, die den Durchtritt von Flüssigkeit durch mindestens eine der Öffnungen verhindert, und wobei der mindestens eine die aufzukonzentrierende Flüssigkeit führende Strömungskanal (11 ) in der ersten in der Reihe angeordneten Kammer (40) und der mindestens eine die Zuglösung führende Strömungskanal (15) in der letzten in der Reihe angeordneten Kammer (41) angeordnet sind.

2. Vorrichtung (101-108) nach Anspruch 1,
**dadurch gekennzeichnet, dass**
ein erster Flüssigkeitsauslass (31 ) zur Abfuhr von ungewollt durch die mindestens eine erste Membranwand (12) gelangter Flüssigkeit an den Dampfraum (13) angeschlossen ist, und/oder
ein zweiter Flüssigkeitsauslass (33) zur Abfuhr von ungewollt durch die mindestens eine zweite Membranwand (14) gelangter Zuglösung an den Dampfraum (13) angeschlossen ist.

3. Vorrichtung (102) nach Anspruch 2,
**dadurch gekennzeichnet, dass**
die Öffnung oder Öffnungen in der Trennwand (42) oder den Trennwänden derart angeordnet sind, dass keine direkte Sichtverbindung zwischen der mindestens eine ersten Membranwand (12) und der mindestens einen zweiten Membranwand (14) besteht.

4. Vorrichtung (101-108) nach einem der vorhergehenden Ansprüche,
**dadurch gekennzeichnet, dass**
die mindestens eine erste Membranwand (12) in mindestens einer der osmotischen Destillationsstufen eine unterschiedliche Oberflächengröße als die mindestens eine zweite Membranwand (14) in derselben osmotischen Destillationsstufe aufweist.

5. Vorrichtung (103, 104) nach einem der vorhergehenden Ansprüche,
**dadurch gekennzeichnet, dass**
die Vorrichtung (103, 104) mehrere hintereinander geschaltete osmotische Destillationsstufen (50, 51, 60, 61, 62) aufweist und die die aufzukonzentrierende Flüssigkeit führenden Strömungskanäle (11) aufeinander folgender osmotischer Destillationsstufen (50, 51, 60, 61, 62) jeweils in Reihe geschaltet sind.

6. Vorrichtung (103, 104) nach Anspruch 5,
**dadurch gekennzeichnet, dass**
wobei die die Zuglösung führenden Strömungskanäle (15) aufeinander folgender osmotischer Destillationsstufen (50, 51, 60, 61, 62) jeweils in Reihe geschaltet sind.

7. Vorrichtung (105, 107, 108) nach einem der vorhergehenden Ansprüche,
**dadurch gekennzeichnet, dass**
die Vorrichtung (105, 107, 108) ein Rezirkulationssystem zur Rezirkulation der Zuglösung aufweist, wobei das Rezirkulationssystem zumindest einen Teil der Zuglösung, welche mindestens eine der osmotischen Destillationsstufen durchlaufen hat, erneut der mindestens einen osmotischen Destillationsstufe zuführt, wobei das Rezirkulationssystem insbesondere eine Regenerationseinheit (95) zur Regeneration der Zuglösung aufweist.

8. Vorrichtung (102-107) nach einem der vorhergehenden Ansprüche,
**dadurch gekennzeichnet, dass**
mindestens eine der osmotischen Destillationsstufen mehrere zueinander parallele, die aufzukonzentrierende Flüssigkeit führende Strömungskanäle (11 ) umfasst und die mehreren zueinander parallelen Strömungskanäle (11 ) durch eine jeweilige dampfdurchlässige und flüssigkeitsdichte erste Membranwand (12) vom Dampfraum (13) getrennt sind, und/oder mindestens eine der osmotischen Destillationsstufen mehrere zueinander parallele, die Zuglösung führende Strömungskanäle (15) umfasst und die mehreren zueinander parallelen Strömungskanäle (15) durch eine jeweilige dampfdurchlässige und flüssigkeitsdichte zweite Membranwand (14) vom Dampfraum (13) getrennt sind.

9. Verwendung der Vorrichtung (101 -108) zur osmotischen Destillation nach einem der vorhergehenden Ansprüche zur Aufkonzentrierung von Lebensmitteln, insbesondere Fruchtsaft, alkoholfreiem Bier, alkoholfreiem Wein oder anderen alkoholfreien Getränken.

10. Verwendung der Vorrichtung (101 -108) zur osmotischen Destillation nach einem der Ansprüche 1 bis 8 zur Senkung der Konzentration eines in der aufzukonzentrierenden Flüssigkeit gelösten Stoffs, insbesondere Ammonium.

## Claims

1. A device (101-108) for osmotic distillation including one or more osmotic distillation stages, each osmotic distillation stage including at least one flow channel (11) carrying a liquid to be concentrated and at least one flow channel (15) carrying a draw solution,
wherein each osmotic distillation stage has a vapor space (13) which is separated from the at least one flow channel (11) carrying the liquid to be concentrated by at least one vapor-permeable and liquid-tight first membrane wall (12) and which is separated from the at least one flow channel (15) carrying the draw solution by at least one vapor-permeable and liquid-tight second membrane wall (14), so that vapor arising from the liquid to be concentrated passes through the at least one first membrane wall (12) into said vapor space (13) and vapor from said vapor space (13) passes through the at least one second membrane wall (14) to the draw solution and condenses there,
**characterized in that**
the vapor space (13) of at least one of the osmotic distillation stages comprises a plurality of chambers (40, 41) arranged in a row, wherein adjacent chambers (40, 41) being separated from one another by a respective liquid-tight and gas-tight partition (42) and each partition (42) having a vapor-permeable opening, wherein preferably at least one liquid barrier (44), in particular a dam, is provided which prevents the passage of liquid through at least one of the openings, and wherein the at least one flow channel (11) carrying the liquid to be concentrated is arranged in the first chamber (40) arranged in the row and the at least one flow channel (15) carrying the draw solution is arranged in the last chamber (41) arranged in the row.

2. The device (101-108) according to claim 1,
**characterized in that**
a first liquid outlet (31) for discharging liquid that has unintentionally passed through the at least one first membrane wall (12) is connected to said vapor space (13), and/or
a second liquid outlet (33) for discharging draw solution that has unintentionally passed through the at least one second membrane wall (14) is connected to said vapor space (13).

3. The device (102) according to claim 2,
**characterized in that**
the opening or openings in the partition (42) or partitions are arranged such that there is no direct line of sight between the at least one first membrane wall (12) and the at least one second membrane wall (14).

4. The device (101-108) according to one of the preceding claims,
**characterized in that**
the at least one first membrane wall (12) in at least one of the osmotic distillation stages has a different surface area than the at least one second membrane wall (14) in the same osmotic distillation stage.

5. The device (103, 104) according to one of the preceding claims,
**characterized in that**
the device (103, 104) includes a plurality of osmotic distillation stages (50, 51, 60, 61, 62) connected successively and the flow channels (11) carrying the liquid to be concentrated of successive osmotic distillation stages (50, 51, 60, 61, 62) are each connected in series.

6. The device (103, 104) according to claim 5,
**characterized in that**
the flow channels (15) carrying the draw solution of successive osmotic distillation stages (50, 51, 60, 61, 62) are each connected in series.

7. The device (105, 107, 108) according to one of the preceding claims,
**characterized in that**
the device (105, 107, 108) includes a recirculation system for recirculating the draw solution, wherein the recirculation system feeds at least part of the draw solution, which has gone through at least one of the osmotic distillation stages, back to the at least one osmotic distillation stage, said recirculation system including in particular a regeneration unit (95) for regenerating the draw solution.

8. The device (102-107) according to one of the preceding claims,
**characterized in that**
at least one of the osmotic distillation stages comprises a plurality of parallel flow channels (11) carrying the liquid to be concentrated and the plurality of parallel flow channels (11) are separated from said vapor space (13) by a respective vapor-permeable and liquid-tight first membrane wall (12), and/or at least one of the osmotic distillation stages comprises a plurality of parallel flow channels (15) carrying the draw solution and the plurality of parallel flow channels (15) are separated from said vapor space (13) by a respective vapor-permeable and liquid-tight second membrane wall (14).

9. Use of the device (101-108) for osmotic distillation according to one of the preceding claims for the concentration of food, in particular fruit juice, non-alcoholic beer, non-alcoholic wine or other non-alcoholic beverages.

10. Use of the device (101-108) for osmotic distillation according to one of Claims 1 to 8 for reducing the concentration of a substance dissolved in the liquid to be concentrated, in particular ammonium.

## Revendications

1. Dispositif (101 - 108) pour la distillation osmotique avec un ou plusieurs étages de distillation osmotique, chaque étage de distillation osmotique présentant au moins un canal d'écoulement (11) guidant un liquide à concentrer et présentant au moins un canal d'écoulement (15) guidant une solution de tirage,
chaque étage de distillation osmotique présentant une chambre à vapeur (13) qui est séparée par au moins une première paroi membranaire (12) perméable à la vapeur et étanche aux liquides dudit au moins un canal d'écoulement (11) guidant le liquide à concentrer et qui est séparée par au moins une deuxième paroi membranaire (14) perméable à la vapeur et étanche aux liquides dudit au moins un canal d'écoulement (15) guidant la solution de tirage, de sorte qu'une vapeur produite à partir du liquide à concentrer parvient dans la chambre à vapeur (13) à travers ladite au moins une première paroi membranaire (12) et que la vapeur provenant de la chambre à vapeur (13) parvient dans la solution de tirage à travers ladite au moins une deuxième paroi membranaire (14) et s'y condense,
**caractérisé en ce que**
la chambre à vapeur (13) d'au moins un des étages de distillation osmotique comprend plusieurs chambres (40, 41) disposées selon une rangée, des chambres voisines (40, 41) étant séparées l'une de l'autre par une paroi de séparation respective (42) étanche aux liquides et aux gaz et chaque paroi de séparation (42) présentant une ouverture pour le passage de la vapeur, au moins une barrière au liquide (44), en particulier un barrage, étant de préférence prévue, qui empêche le passage de liquide à travers au moins l'une des ouvertures, et ledit au moins un canal d'écoulement (11) qui guide le liquide à concentrer étant disposé dans la première chambre (40) présente dans la rangée et ledit au moins un canal d'écoulement (15) qui guide la solution de tirage étant disposé dans la dernière chambre (41) présente dans la rangée.

2. Dispositif (101 - 108) selon la revendication 1,
**caractérisé en ce que**
une première sortie de liquide (31) est raccordée à la chambre à vapeur (13) pour évacuer le liquide qui a traversé involontairement ladite au moins une première paroi membranaire (12), et/ou
une deuxième sortie de liquide (33) est raccordée à la chambre à vapeur (13) pour évacuer la solution de tirage qui a traversé involontairement ladite au moins une deuxième paroi membranaire (14).

3. Dispositif (102) selon la revendication 2,
**caractérisé en ce que**
l'ouverture ou les ouvertures dans la paroi de séparation (42) ou les parois de séparation sont disposées de telle sorte qu'il n'existe pas de liaison visuelle directe entre ladite au moins une première paroi membranaire (12) et ladite au moins une deuxième paroi membranaire (14).

4. Dispositif (101 - 108) selon l'une quelconque des revendications précédentes,
**caractérisé en ce que**
ladite au moins une première paroi membranaire (12) présente, dans au moins un desdits étages de distillation osmotique, une dimension de surface différente de celle de ladite au moins une deuxième paroi membranaire (14) dans le même étage de distillation osmotique.

5. Dispositif (103, 104) selon l'une quelconque des revendications précédentes,
**caractérisé en ce que**
le dispositif (103, 104) présente plusieurs étages de distillation osmotique (50, 51, 60, 61, 62) connectés en série et les canaux d'écoulement (11) guidant le liquide à concentrer d'étages de distillation osmotique (50, 51, 60, 61, 62) successifs sont respectivement connectés en série.

6. Dispositif (103, 104) selon la revendication 5,
**caractérisé en ce que**
les canaux d'écoulement (15) guidant la solution de tirage des étages de distillation osmotique (50, 51, 60, 61, 62) successifs sont respectivement connectés en série.

7. Dispositif (105, 107, 108) selon l'une des revendications précédentes,
**caractérisé en ce que**
le dispositif (105, 107, 108) comprend un système de recirculation pour la recirculation de la solution de tirage, le système de recirculation fournissant à nouveau audit au moins un étage de distillation osmotique au moins une partie de la solution de tirage qui a traversé au moins un des étages de distillation osmotique, le système de recirculation comprenant notamment une unité de régénération (95) pour régénérer la solution de tirage.

8. Dispositif (102 - 107) selon l'une quelconque des revendications précédentes,
**caractérisé en ce que**
au moins un des étages de distillation osmotique comprend plusieurs canaux d'écoulement (11) de guidage du liquide à concentrer parallèles entre eux, et lesdits plusieurs canaux d'écoulement (11) parallèles entre eux sont séparés de la chambre à vapeur (13) par une première paroi membranaire (12) respective perméable à la vapeur et étanche aux liquides, et/ou
au moins un des étages de distillation osmotique comprend plusieurs canaux d'écoulement (15)de guidage de la solution de tirage parallèles entre eux, et lesdits plusieurs canaux d'écoulement (15) parallèles entre eux sont séparés de la chambre à vapeur (13) par une deuxième paroi membranaire (14) respective perméable à la vapeur et étanche aux liquides.

9. Utilisation du dispositif (101 - 108) pour la distillation osmotique selon l'une des revendications précédentes de façon à concentrer des produits alimentaires, notamment du jus de fruit, de la bière sans alcool, du vin sans alcool ou d'autres boissons sans alcool.

10. Utilisation du dispositif (101 - 108) de distillation osmotique selon l'une des revendications 1 à 8 pour abaisser la concentration d'une substance dissoute dans le liquide à concentrer, notamment de l'ammonium.
